# EUROPÄISCHE PATENTANMELDUNG

(11) **EP 0 843 107 A1**
(43) Veröffentlichungstag der Anmeldung: **20.05.1998**
(21) Anmeldenummer: 97119521.9
(22) Anmeldetag: 07.11.1997
(51) Int. Cl.: F16D 23/06

(54) **Synchronisiereinrichtung eines Zahnräderwechselgetriebes**

(30) Priorität: 13.11.1996 DE 19646850
(71) Anmelder: Daimler-Benz Aktiengesellschaft, 70546 Stuttgart (DE)
(72) Erfinder: Leucht, Hans, 73732 Esslingen (DE)

(57) **Zusammenfassung**

Bei einer Synchronisiereinrichtung (46) für ein mit seiner Welle (10) kuppelbares Zahnrad (11) eines Zahnräderwechselgetriebes ist eine Schaltschiebemuffe (15) mit einer axialen Kupplungsverzahnung (16) versehen, welche eine Gruppe (32) von Kupplungszähnen (20) mit ausschließlich als Sperrflächen verwendeten Schrägflächen (17,18) und eine zweite Gruppe (33) von Kupplungszähnen (21) mit ausschließlich zum Einfädeln in eine korrespondierende axiale Kupplungsverzahnung (14) des Zahnrades (11) verwendeten Schrägflächen (30,31) aufweist.

## Beschreibung

Die Erfindung bezieht sich auf eine Synchronisiereinrichtung nach dem Oberbegriff von Patentanspruch 1.

Bei Zahnräderwechselgetrieben tritt bei niedrigen Außentemperaturen (Kaltstart im Winter) die Funktionsstörung "Hochschaltkratzen" an der Synchronisiereinrichtung beim Einlegen eines höheren Ganges auf, wenn nicht besondere konstruktive Vorsorgemaßnahmen getroffen sind.

Beim Kaltstart wird der Gleichlauf zwischen Schaltschiebemuffe (Welle) und Zahnrad beim Synchronisieren zwar zunächst erreicht, während des nachfolgenden Durchschaltens jedoch nicht aufrecht erhalten, weil das hohe Planschmoment der in das kalte zähe Öl eintauchenden rotierenden Zahnräder eine den Gleichlauf aufhebende Bremswirkung erzeugt, so daß das Einfädeln der Kupplungsverzahnung der Schaltschiebemuffe in die Kupplungsverzahnung des Zahnrades bei einer Differenzdrehzahl erfolgt. Dadurch kommt es zu einem höhrbaren Kratzen und gegebenenfalls auch zu einem Schlag oder Prellen am Handschalthebel.

Zur Vermeidung der Funktionsstörung "Hochschaltkratzen" sind Vorsorgemaßnahmen bei einer bekannten gattungsgemäßen Synchronisiereinrichtung (DE 34 44 670 C1, Fig. 6) dahingehend getroffen, daß am Umfang des Synchronringes federbelastete Sperrbolzen tangential und senkrecht zur Zentralachse angeordnet sind, welche mit ihrem einen, kegelförmig zugespitzten Bolzenende jeweils mit einer zur Zentralachse schrägen Sperrfläche eines Kupplungszahnes der Kupplungsverzahnung der Schaltschiebemuffe so zusammenarbeiten sollen, daß die Feder beim Synchronisieren zusammengespannt wird und den Synchronring bei erzieltem Gleichlauf in seine Ausgangslage gegenüber der Schaltschiebemuffe in Drehrichtung zurückstellt, so daß ein erneuter Synchronisiervorgang eingeleitet werden könne. Der die in Zusammenarbeit mit dem Sperrbolzen ausschließlich zum Sperren verwendete Schrägfläche aufweisende Kupplungszahn der Schaltschiebemuffe ist mit seinem diesbezüglichen Stirnende gegenüber einem in Umfangsrichtung benachbarten Kupplungszahn in der vom Zahnrad weg weisenden Richtung der Zentralachse zurückgesetzt, weil dessen Stirnende mit ausschließlich zum Einfädeln in die Kupplungsverzahnung des Zahnrades verwendeten Schrägflächen versehen ist. Die Sperrbolzen des Synchronringes sind jedoch die Ursache für ein eingeschränktes Drehmomentübertragungsvermögen der Schaltschiebemuffe, weil deren Kupplungsverzahnung an den Stellen der Sperrbolzen unterbrochen sein muß.

Die der Erfindung zugrunde liegende Aufgabe besteht im wesentlichen darin, bei einem synchronisierten Zahnräderwechselgetriebe das Auftreten von "Hochschaltkratzen" zu vermeiden, ohne daß die Übertragungsfähigkeit der Synchronisiereinrichtung eine Beeinträchtigung erfährt.

Die erläuterte Aufgabe ist gemäß der Erfindung mit den Merkmalen von Patentanspruch 1 in vorteilhafter Weise gelöst.

Es hat sich gezeigt, daß ein kleiner Schrägwinkel der als Sperrfläche verwendeten Schrägflächen Vorteile bezüglich des Vermeidens des Hochschaltkratzens mit sich bringt, weil dann die Momentenstöße beim Einspuren nur geringe Axialkraftstöße am Handschalthebel zur Folge haben.

Ein kleiner Schrägwinkel hat jedoch den Nachteil, daß die Sperrsicherheit nicht ausreichend gewährleistet ist, weil die Synchronisierung durch Ratschen ausfallen kann.

Bei der Synchronisiereinrichtung nach der Erfindung sind sowohl kleine Schrägwinkel bei der Gruppe von Kupplungszähnen, deren Schrägflächen ausschließlich zum Einfädeln verwendet sind, als auch größere Schrägwinkel bei der anderen Gruppe von Kupplungszähnen, deren Schrägflächen ausschließlich zum Sperren verwendet sind, realisiert - wobei beide Gruppen von Kupplungszähnen Drehmoment übertragen, wenn die Kupplungsverzahnung der Schaltschiebemuffe nach Beendigung des Synchronisier- und Schaltvorganges vollständig in die Xupplungsverzahnung des Zahnrades eingerückt ist.

Die Unteransprüche 2 und 3 haben auf die gleichmäßige Beteiligung beider Gruppen von Kupplungszähnen der Schaltschiebemuffe an der Drehmomentübertragung bei der Synchronisiereinrichtung nach der Erfindung abgestellte vorteilhafte Ausgestaltungen zum Gegenstand.

Die Unteransprüche 4 bis 7 haben vorteilhafte, die Relativdrehung zwischen Welle und Zahnrad berücksichtigende Ausgestaltungen der Schrägflächen der Kupplungszähne beider Gruppen bei der Synchronisiereinrichtung nach der Erfindung zum Gegenstand.

Bei der Synchronisiereinrichtrnng nach der Erfindung kommen die Schrägflächen der Kupplungszähne an der Schaltschiebemuffe, welche der ersten Gruppe angehören, nur mit der Sperrverzahnung des Synchronringes in Kontakt. Diese Kupplungszähne sind etwas kürzer als die Kupplungszähne der zweiten Gruppe, damit die Schrägflächen der ersten wegen ihrer auf die, Sperrfunktion abgestellten flacheren Schrägwinkel hinter die auf das Einfädeln ausgelegten spitzwinkligeren Schrägflächen der Kupplungszähne der zweiten Gruppe zu liegen kommen, die ihrerseits nur mit der Kupplungsverzahnung des Zahnrades in Kontakt kommen.

Bei der Synchronisiereinrichtung nach der Erfindung können die Schrägflächen der Kupplungszahne an der Schaltschiebemuffe, welche der zweiten Gruppe angehören und somit ausschließlich zum Einfädeln verwendet sind, asymmetrisch ausgebildet sein, so daß die beim Einfädeln in Kontakt geratenden beiden Schrägflächen von Schaltschiebemuffe und Zahnrad mit besonders spitzen Schrägwinkeln ausgelegt sein können.

Bei einer vorteilhaften Ausführungsform der Synchronisiereinrichtung nach der Erfindung kann die Kupplungsverzahnung der Schaltschiebemuffe beispielsweise gleichmäßig in sechs erste Gruppen von je sechs Kupplungszähnen, deren Schrägflächen ausschließlich zum Sperren verwendet sind, und in sechs zweite Gruppen von je fünf Kupplungszähnen, deren Schrägflächen ausschließlich zum Einfädeln verwendet sind, aufgeteilt sein, wobei die erste und zweite Gruppen in Umfangsrichtung in wechselnder Reihenfolge angeordnet sind.

Bei der Montage der Synchronisiereinrichtung nach der Erfindung ist darauf zu achten, daß die Schaltschiebemuffe in bezug auf ihre Drehwinkelstellung zur Welle so positioniert wird, daß ihre ersten Gruppen von Kupplungszähnen, deren Schrägflächen ausschließlich zum Sperren verwendet sind, jeweils einer entsprechenden Gruppe von Sperrzähnen am Synchronring gegenüberstehen. Die verzahnungsfreien Aussparungen am Umfang des Synchronringes sind für den Durchgang der zweiten Gruppen von Kupplungszähnen der Schaltschiebemuffe verwendet, deren Schrägflächen ausschließlich zum Einfädeln verwendet sind.

Die Erfindung ist nachstehend anhand eines in der Zeichnung schematisch dargestellten Ausführungsbeispieles näher beschrieben. In der Zeichnung bedeuten
- Fig. 1: einen Teilschnitt durch ein Zahnräderwechselgetriebe mit einer Synchronisiereinrichtung nach der Erfindung
- Fig. 1a: die Synchronisiereinrichtung von Fig. 1 in Einzeldarstellung in einem gegenüber der Fig. 1 vergrößerten Maßstab,
- Fig. 2: einen Schaltmuffenträger der Synchronisiereinrichtung von Fig. 1 in Einzeldarstellung in Ansicht in einem der Fig. 1a entsprechenden Maßstab,

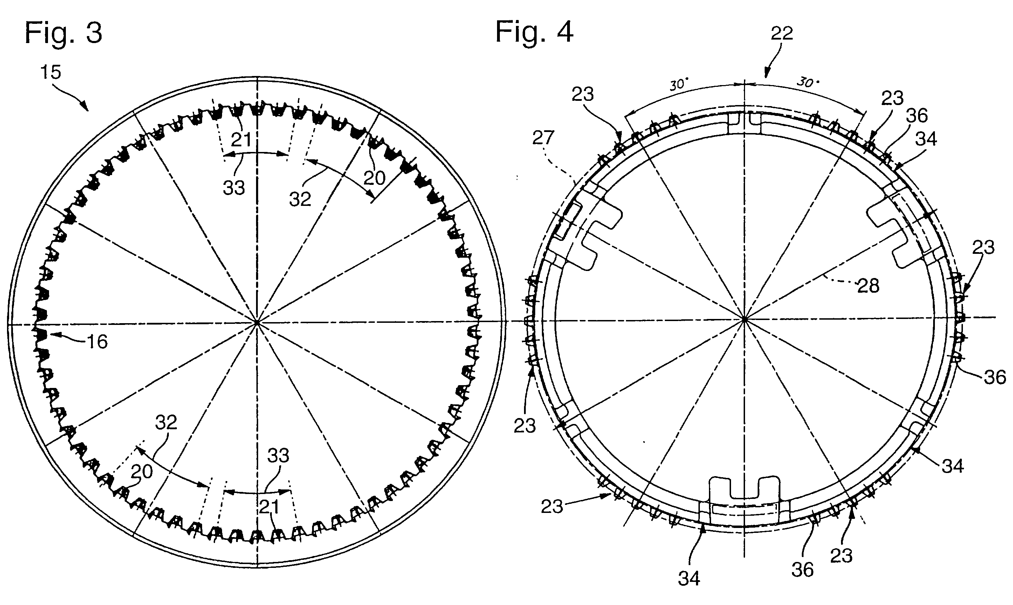

- Fig. 3: eine Schaltschiebemuffe der Snychronisiereinrichtung von Fig. 1 in Einzeldarstellung in Ansicht in einem der Fig. 1a entsprechenden Maßstab,
- Fig. 4: einen Synchronring der Synchronisiereinrichtung von Fig. 1 in Einzeldarstellung in Ansicht in einem der Fig. 1a entsprechenden Maßstab,
- Fig. 5: einen Schnitt durch die Sperr- und Kupplungsverzahnungen der Synchronisereinrichtung von Fig. 1 in Abwicklung in einem gegenüber dem Maßstab der Fig. 1a vergrößerten Maßstab, wobei die Stellungen der Verzahnungen zueinander für zwei verschiedene Schaltzustände dargestellt sowie ein zum Sperren und ein zum Einfädeln verwendeter Kupplungszahn der Schaltschiebemuffe zum besseren Vergleich in Überdeckung gezeichnet sind, und die
- Fign. 6 bis 9: jeweils einen Schnitt durch die Sperr- und Kupplungsverzahnungen der Synchronisiereinrichtung von Fig. 1 in Abwicklung in einem zwischen den Maßstäben der Fign. 1a und 5 liegenden Maßstab, wobei die Stellungen der Verzahnungen zueinander jeweils in einem von vier verschiedenen Schaltzuständen wiedergegeben sind.

In einem Getriebegehäuse eines Zahnräderwechselgetriebes sind eine eingangsseitige Welle 41, eine koaxiale ausgangsseitige Welle 10 und eine parallele Vorgelege-Welle 42 drehbar gelagert. Die eingangsseitige Welle 41 steht über eine als Getriebekonstante verwendete Zahnradstufe 43 mit der Vorgelegewelle 42 in ständiger Antriebsverbindung. Zwischen der ausgangsseitigen Welle 10 und der Vorgelege-Welle 42 ist eine Antriebsverbindung unter anderem durch eine Zahnradstufe 44 unter Vermittlung einer Synchronisiereinrichtung 46 nach der Erfindung herstellbar. Die Zahnradstufe 44 besteht aus einem drehbar und axial unverschiebbar auf der Welle 10 gelagerten Zahnrad 11 und einem mit letzterem kämmenden sowie fest auf der Vorgelege-Welle 42 sitzenden Vorgelegezahnrad 45.

Zu der Synchronisiereinrichtung 46 gehören
- eine äußere axiale Kupplungsverzahnung 14, welche zu der Zentralachse 12-12, mit welcher die Drehachsen von Welle 10 und Zahnrad 11 zusammenfallen, konzentrisch und zum Zahnrad 11 bewegungsfest angeordnet ist,
- ein axial neben dem Zahnrad 11 und konzentrisch zur Zentralachse 12-12 angeordneter ringförmiger Schaltmuffenträger 47, welcher bewegungsfest auf der Welle 10 fixiert und mit einer äußeren axialen Mitnahmeverzahnung 49 versehen ist, welche zur Zentralachse 12-12 konzentrisch ausgebildet ist,
- eine ringförmige Schaltschiebemuffe 15 mit einer inneren axialen Kupplungsverzahnung 16, welche zur Zentralachse 12-12 konzentrisch ausgebildet und in die äußere Kupplungsverzahnung 14 einfahrbar ist, wobei die Schaltschiebemuffe 15 mit ihrer inneren Kupplungsverzahnung 16 in die korrespondierende äußere Mitnahmeverzahnung 49 des Schaltmuffenträgers 47 eingreift und auf diese Weise gegenüber der Welle 10 drehfest und axial verschiebbar angeordnet ist,
- ein axial zwischen äußerer Kupplungsverzahnung 14 und dem Schaltmuffenträger 47 sowie konzentrisch zur Zentralachse 12-12 angeordneter Synchronring 22, welcher gegenüber dem Schaltmuffenträger 47 begrenzt drehbeweglich angeordnet ist und eine äußere axiale Sperrverzahnung 23 aufweist, welche zur Zentralachse 12-12 konzentrisch aus gebildet ist und von der inneren Kupplungsverzahnung 16 Schaltschiebemuffe 15 durchfahren werden kann, und
- eine Reibschlußkupplung 26, welche axial ein- und ausrückbar sowie wirkungsmäßig zwischen dem Zahnrad 11 und dem Synchronring 22 angeordnet ist.

Die Reibschlußkupplung 26 weist einen relativ zum Zahnrad 11 bewegungsfesten Außenkonus 50 und einen zum Synchronring 22 einteilig ausgebildeten Innenkonus 51 auf, welche in gegenseitigen Reibschluß gebracht werden können, wenn die Schaltschiebemuffe 15 in Richtung des Zahnrades 11 betätigt wird und dabei den Synchronring 22 über ein zur Zentralachse 12-12 radial einfederbares Druckstück 52 im Einrücksinne der Reibschlußkupplung 26 beaufschlagt.

Die innere Kupplungsverzahnung 16 der Schaltschiebemuffe 15, welche mit der äußeren Mitnahmeverzahnung 49 des Schaltmuffenträger 47 den Teilkreis 54 vom Durchmesser 28 gemeinsam hat, ist in den Umfangsrichtungen der Zentralachse 12-12 wechselweise in erste Gruppen 32 von jeweils sechs Kupplungszähnen 20 und zweite Gruppen 33 von jeweils fünf Kupplungszähnen 21 gleichmäßig aufgeteilt.

Die Sperrverzahnung 23 des Synchronringes 22 mit dem Teilkreis 27, welcher den gleichen Durchmesser 28 wie die Teilkreise der Kupplungsverzahnungen 14 und 16 aufweist, ist durch verzahnungsfreie Aussparungen 34 in den Umfangsrichtungen derart unterbrochen, daß den verbleibenden Verzahnungsabschnitten mit jeweils fünf Sperrzähnen 36 der Sperrverzahnung 23 jeweils eine erste Gruppe 32 von sechs Kupplungszähnen 20 der Kupplungsverzahnung 16 der Schaltschiebemuffe 15 und jeder Aussparung 34 eine zweite Gruppe 33 von fünf Kupplungszähnen 21 der Kupplungsverzahnung 16 der Schaltschiebemuffe 15 gegenüberstehen.

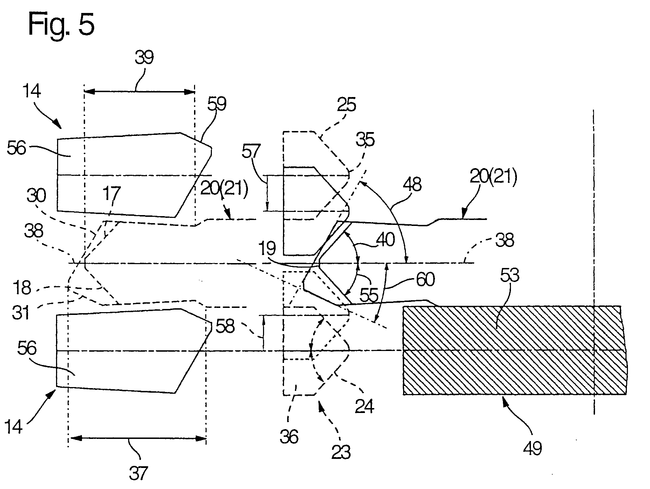

In Fig. 5 sind jeweils in Abwicklung und mit ausgezogenen Linien dargestellt:

Zwei in Umfangsrichtung zur Zentralachse 12-12 benachbarte Kupplungszähne 56 der äußeren Kupplungsverzahnung 14 des Zahnrades 11,
ein Sperrzahn 36 der Sperrverzahnung 23 des Synchronringes 22,
ein Mitnahmezahn 53 der Mitnahmeverzahnung 49 des Schaltmuffenträgers 47,
ein Kupplungszahn 20 einer ersten Grupe 32 von Kupplungszähnen der Kupplungsverzahnung 16 der Schaltschiebemuffe 15, und
ein Kupplungszahn 21 einer zweiten Gruppe 33 von Kupplungszähnen der Kupplungsverzahnung 16 der Schaltschiebemuffe 15.

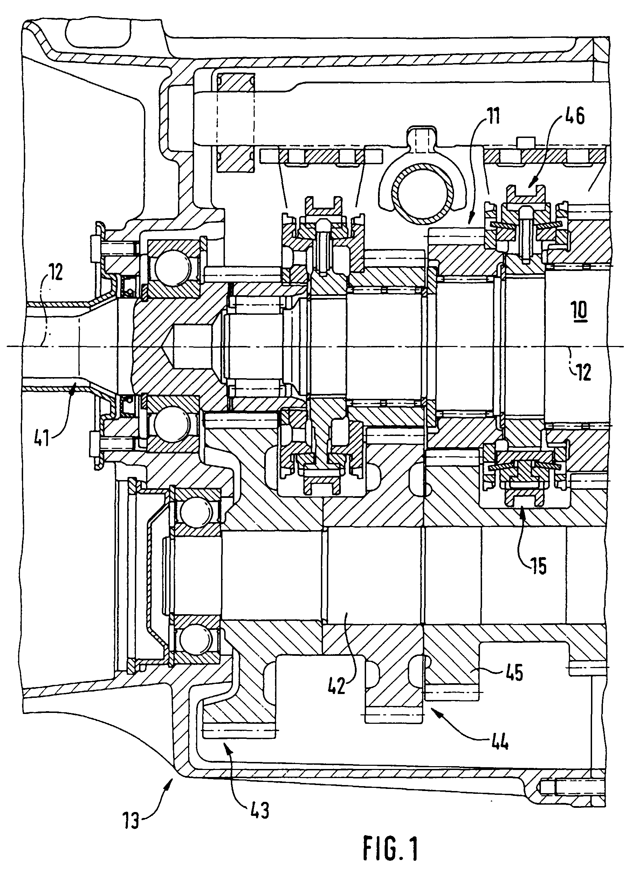

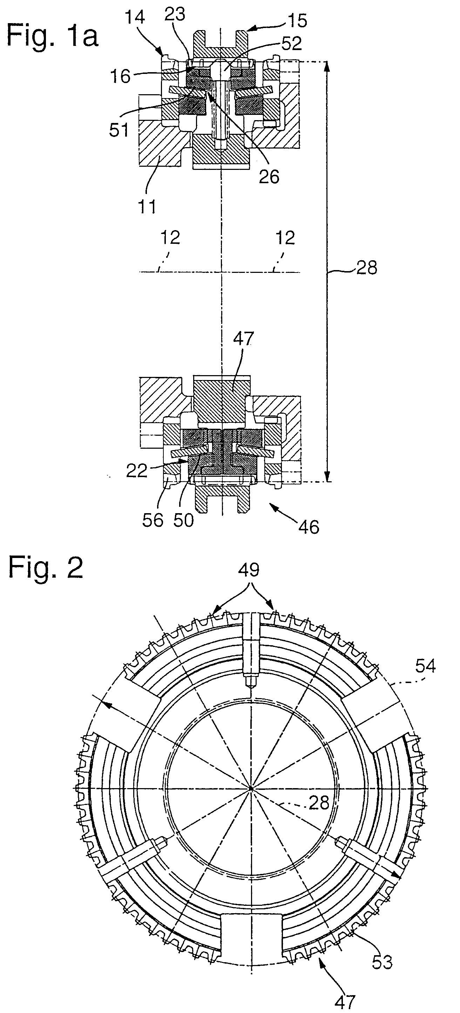

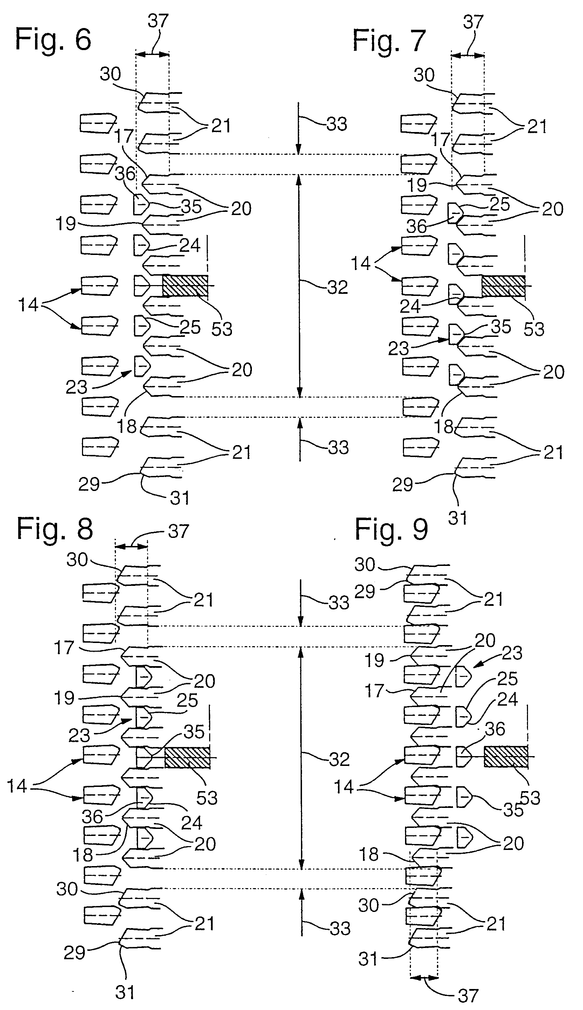

Der mit ausgezogenen Linien gezeichnete Sperrzahn 36 und der mit ausgezogenen Linien gezeichnete Kupplungszahn 20 sind jeweils in einer im Sperrzustand der Synchronisiereinrichtung 46 gemäß der Fig. 7 sich einstellenden Sperr-Stellung gezeichnet, wenn die Schaltschiebemuffe 15 aus der in den Fign. 1, 1a und 6 gezeichneten Neutralstellung heraus in Richtung des Zahnrades 11 betätigt ist und dabei die Reibschlußkupplung 26 eingerückt hat, so daß der Synchronring 22 durch das in Pfeilrichtung 57 schneller als die Welle 10 drehende Zahnrad 11 in die in den Fign. 5 und 7 gezeichnete Sperrstellung gebracht ist, in welcher die in bezug auf die Drehrichtung "hinten" liegende Schrägfläche 17 des Kupplungszahnes 20 an der in bezug auf die Drehrichtung 57 "vorn" liegenden Schrägfläche 24 des Sperrzahnes 36 anliegt.

Durch die in Fig. 5 punktiert gezeichnete Stellung des Sperrzahnes 36 ist der andere Sperrzustand der Schaltschiebemuffe 15 angedeutet, welcher sich einstellt, wenn das Zahnrad 11 in dem entgegengesetzten Drehsinn 58 relativ zur Welle 10 dreht und mithin den Synchronring 22 in dieser Richtung in seine andere Sperrstellung "mitnimmt", in welcher die in Drehrichtung 58 "hinten" liegende Schrägfläche 18 des Kupplungszahnes 20 an der in Drehrichtung 58 "vorn" liegenden Sperrfläche 25 des Sperrzahnes 36 anliegt.

Die Schrägflächen 17 und 18 des Kupplungszahnes 20, welche an den dem Zahnrad 11 zugekehrten Stirnenden 19 der Kupplungsverzahnung liegen, sind symmetrisch, d. h., sie schließen jeweils mit der die Zentralachse 12-12 enthaltenden Zahnmittelebene 38-38 gleiche Schrägwinkel 40 = 55 ein.

Auch die Schrägflächen 24 und 25 der Sperrzähne 36 sind in entsprechender Weise symmetrisch und mit gleichen Schrägwinkeln ausgebildet sowie an den dem Schaltmuffenträger 47 zugekehrten Stirnenden 35 des jeweiligen Sperrzahnes 36 vorgesehen.

Die in Fig. 5 jeweils gestrichelt gezeichnete Stellung der beiden Sperrzähne 36 entspricht der Neutralstellung der Synchronisiereinrichtung gemäß Fig. 6, in welcher jeweils eine erste Gruppe 32 von sechs Kupplungszähnen 20 der Schaltschiebemuffe 15, deren Schrägflächen 17 und 18 ausschließlich als Sperrflächen verwendet sind, einem Abschnitt der Sperrverzahnung 23 des Synchronringes 22 mit fünf Sperrzähnen 36 gegenübersteht. In entsprechender Weise steht in der Neutralstellung der Synchronisiereinrichtung 46 gemäß Fig. 6 jeweils eine zweite Gruppe 33 von fünf Kupplungszähnen 21 der Kupplungsverzahnung 16 der Schaltschiebemuffe 15, deren Schrägflächen 30 und 31 ausschließlich zum Einfädeln verwendet und jeweils an dem dem Zahnrad 11 zugekehrten Stirnende 29 ihres Kupplungszahnes vorgesehen sind, einer verzahnungsfreien Aussparung 34 am Umfang des Synchronringes 22 gegenüber.

Wie sich auch aus dem in Fig. 7 gezeichneten Sperrzustand der Synchronisiereinrichtung 46 ohne weiteres ergibt, sind die zweiten Gruppen 33 von Kupplungszähnen 21 der Kupplungsverzahnung 16 der Schaltschiebemuffe 15 an der Sperrfunktion unbeteiligt.

Um in bezug auf die Ausgestaltung der Schrägflächen und deren Lage zueinander in den Richtungen der Zentralachse 12-12 die Kupplungszähne 20 der ersten Gruppe 32 einerseits mit den Kupplungszähnen 21 der zweiten Gruppe 33 andererseits besser vergleichen zu können, wurde deren zeichnerische Überdeckung in Fig. 5 vorgesehen, bei welcher der in der Sperrstellung stehende und mit ausgezogenen Linien gezeichnete Kupplungszahn 20 der ersten Gruppe 32 mit einem Kupplungszahn 21 der zweiten Gruppe 33 in Überdeckung steht. Dadurch wird deutlich erkennbar, daß die Schrägfläche 17 des Kupplungszahnes 20, welche in bezug auf die Umfangsrichtungen der Zentralachse 12-12 auf der einen Seite der die Zentralachse 12-12 enthaltenden Zahnmittelebene 38-38 des Kupplungszahnes 20 liegt, mit der Zahnmittelebene 38-38 einen Schrägwinkel 40 einschließt, welcher kleiner ist als der Schrägwinkel 48, den die auf derselben Seite der die Zentralachse 12-12 enthaltenden Zahnmittelebene 38-38 ihres Kupplungszahnes 21 liegende Schrägfläche 30 des Kupplungszahnes 21 mit der Zahnmittelebene 38-38 einschließt.

Weiterhin wird erkennbar, daß die Schrägflächen 30 und 31 des Kupplungszahnes 21 der zweiten Gruppe 33 derart asymmetrisch zur Zahnmittelebene 38-38 liegen, daß die beim Einfädeln in Relativdrehrichtung 57 "vorn" liegende und dabei mit einer korrespondierenden Schrägfläche 59 eines Kupplungszahnes 56 der Kupplungsverzahnung 14 des Zahnrades 11 in Kontakt tretende Schrägfläche 31 des Kupplungszahnes 21, welche asymmetrisch auf der anderen Seite der Zahnmittelebene 38-38 liegt, mit der Zahnmittelebene 38-38 einen Schrägwinkel 60 einschließt, welcher wesentlich kleiner (spitzer) ist als der Schrägwinkel 55, den die ebenfalls auf der anderen Seite der Zahnmittelebene 38-38 ihres Kupplungszahnes 20 liegende Schrägfläche 18 mit der Zahnmittelebene 38-38 einschließt.

Dieser Zustand des Einfädelns der Kupplungszähne 21 der zweiten Gruppe 33 der Kupplungsverzahnung 16 der Schaltschiebemutte 15 in die Kupplungsverzahnung 14 des Zahnrades 11 ergibt sich gemäß Fig. 8 nach erfolgtem Gleichlauf von Welle 10 und Zahnrad 11, wenn die erste Gruppe 32 von Kupplungszähnen 20 in die Sperrverzahnung 23 des nun kräftefreien Synchronringes 22 eingefahren ist, wobei die spitzen Schrägwinkel 60 das Einfädeln ohne Ratscherscheinungen auch dann ermöglichen, wenn nach erfolgtem Gleichlauf infolge einer Bremswirkung des kalten zähen Öles wieder eine Differenzdrehzahl auftritt.

Aus Fig. 5 wird durch die gestrichelt gezeichnete Überdeckung der Kupplungszähne 20 und 21 - welche sich hier in der dem geschalteten Gang zugehörigen Eingriffsstellung in der Kupplungsverzahnung 14 des Zahnrades 11 gemäß dem in Fig. 9 gezeichneten Schaltzustand der Synchronisiereinrichtung 46 befinden - weiterhin deutlich, daß die beiden Kupplungszähne 20 und 21 - gemessen in der jeweiligen Zahnmittelebene 38-38 - in den Richtungen der Zentralachse 12-12 etwa gleich lang sind (Zahnlängen 39) und sich im gleichen axialen Bereich 37 der Schaltschiebemuffe 15 befinden, d. h., im Schaltzustand sind die Kupplungszähne 20 und 21 etwa gleichermaßen an der Drehmomentübertragung zwischen den Kupplungsverzahnungen 14 und 16 beteiligt. Trotzdem liegen die Schrägflächen 17 und 18 - da beim Einfädeln ohne Funktion - gegenüber den Schrägflächen 30 und 31 in der vom Zahnrad 11 auf den Schaltmuffenträger 47 weisenden Richtung der Zentralachse 12-12 etwas versetzt. Auf diese Weise ist erreicht, daß die Schrägflächen 17 und 18 ausschließlich auf die Funktion "Sperren" und die Schrägflächen 30 und 31 ausschließlich auf die Funktion "Einfädeln" ausgelegt sind, ohne daß eine Beeinrächtigung der Drehmomentübertragung zwischen den Kupplungsverzahnungen 14 und 16 in Kauf genommen werden muß.

## Patentansprüche

1. Synchronisiereinrichtung für ein mit seiner Welle kuppelbares Zahnrad eines Zahnräderwechselgetriebes, mit einer zu der mit der Drehachse der Welle zusammenfallenden Zentralachse konzentrisch und zum Zahnrad bewegungsfesten axialen Kupplungsverzahnung, mit einer zur Zentralachse konzentrisch und zur Welle drehfest und axial verschiebbar angeordneten Schaltschiebemuffe, mit einer zur Zentralachse konzentrischen und zur Schaltschiebemuffe bewegungsfesten axialen Kupplungsverzahnung, welche mit der Kupplungsverzahnung des Zahnrades in Eingriff bringbar ist, mit einer zur Schaltschiebemuffe bewegungsfesten Sperrfläche, welche an dem dem Zahnrad zugekehrten Stirnende eines Kupplungszahnes sowie in einer zur Zentralachse geneigten Zahnebene liegt, mit einem zur Zentralachse konzentrisch und gegenüber der Welle begrenzt drehbeweglich angeordneten Synchronring, mit einer konzentrisch zur Zentralachse und bewegungfest zum Synchronring angeordneten axialen Sperrverzahnung, in welche die Kupplungsverzahnung der Schaltschiebemuffe einfahrbar ist, mit einer in den Richtungen der Zentralachse bewegungsfest zum Synchronring angeordneten Sperrfläche, welche zur Zentralachse geneigt und mit der Sperrfläche der Schaltschiebemuffe in Eingriff bringbar ist, mit einer wirkungsmäßig zwischen dem Zahnrad und dem Synchronring angeordneten axial ein- und ausrückbaren Reibschlußkupplung, welche durch Verschieben der Schaltschiebemuffe einrückbar ist, und bei der die Sperrverzahnung, die Sperrflächen und die Kupplungsverzahnungen jeweils auf einem zur Zentralachse konzentrischen Teilkreis angeordnet sind sowie alle Teilkreise den gleichen Teilkreisdurchmesser aufweisen, und bei der die Kupplungsverzahnung der Schaltschiebemuffe einen ersten Kupplungszahn und einen in Umfangsrichtung zur Zentralachse benachbarten zweiten Kupplungszahn aufweist, welche an ihrem dem Zahnrad zugekehrten Stirnende jeweils wenigstens eine Schrägfläche aufweisen, die in einer zur Zentralachse geneigten Zahnebene liegen, wobei die Schrägflächen des ersten Kupplungszahnes ausschließlich als Sperrflächen verwendet und ausschließlisch mit der jeweils zugehörigen Sperrfläche des Synchronringes in gegenseitige Anlage bringbar sind, während die Schrägflächen des zweiten Kupplungszahnes gegenüber den Schrägflächen des ersten Kupplungszahnes sowohl in der auf das Zahnrad weisenden Richtung der Zentralachse versetzt als auch ausschließlich zum Einfädeln der Kupplungsverzahnung der Schaltschiebemuffe in die Kupplungsverzahnung des Zahnrades verwendet sind,
**dadurch gekennzeichnet,**
daß die Kupplungsverzahnung (16) der Schaltschiebemuffe (15) eine erste Gruppe (32) von in Umfangsrichtung zur Zentralachse (12-12) hintereinander liegenden Kupplungszähnen (20) aufweist, deren Schrägflächen (17, 18) ausschließlich als Sperrflächen verwendet sind, daß die Kupplungsverzahnung (16) der Schaltschiebemuffen (15) eine zweite Gruppe (33) von in Umfangsrichtung zur Zentralachse (12-12) hintereinander liegenden Kupplungszähnen (21) aufweist, deren Schrägflächen (30, 31) ausschließlich zum Einfädeln verwendet sind, daß die Sperrverzahnung (23) in Umfangsrichtung zur Zentralachse (12-12) durch eine verzahnungsfreie Aussparung (34) unterbrochen ist, welche zu der zweiten Gruppe (33) von Kupplungszähnen (21) mit ausschließlich zum Einfädeln verwendeten Schrägflächen (30, 31) in bezug auf die Richtungen der Zentralachse (12-12) gegenüberliegend angeordnet ist, und daß die ausschließlich als Sperrflächen verwendeten Schrägflächen (17, 18) der ersten Gruppe (32) von Kupplungszähnen (20) jeweils ausschließlich mit einer mit dem dem Zahnrad (11) abgekehrten Stirnende (35) eines Sperrzahnes (36) der Sperrverzahnung (23) einteilig ausgebildeten Schrägfläche (24, 25) in gegenseitige Anlage bringbar sind.

2. Synchronisiereinrichtung nach Anspruch 1,
**dadurch gekennzeichnet,**
daß die erste Gruppe (32) von Kupplungszähnen (20), deren Schrägflächen (17, 18) ausschließlich als Sperrflächen verwendet sind, und die zweite Gruppe (33) von Kupplungszähnen (21), deren Schrägflächen (30, 31) ausschließlich zum Einfädeln verwendet sind, in bezug auf die Zentralachse (12-12) in demselben axialen Bereich (37) der Schaltschiebemuffe (15) liegen.

3. Synchronisiereinrichtung nach Anspruch 2,
**dadurch gekennzeichnet,**
daß ein Kupplungszahn (20) der ersten Gruppe (32), dessen Schrägflächen (17, 18) ausschließlich als Sperrflächen verwendet sind, in bezug auf seine die Zentralachse (12-12) enthaltende Zahnmittelebene (38-38) in den Richtungen der Zentralachse (12-12) etwa die gleiche Längenabmessung (39) aufweist wie ein Kupplungszahn (21) der zweiten Gruppe (33), dessen Schrägflächen (30, 31) ausschließlich zum Einfädeln verwendet sind, in bezug auf dessen die Zentralachse (12-12) enthaltenden Zahnmittelebene (38-38).

4. Synchronisiereinrichtung nach Anspruch 3,
**dadurch gekennzeichnet,**
daß die ausschließlich als Sperrfläche verwendete und - bezogen auf die Umfangsrichtungen der Zentralachse (12-12) - auf der einen Seite der die Zentralachse (12-12) enthaltenden Zahnmittelebene (38-38) liegende Schrägfläche (17) eines Kupplungszahnes (20) der ersten Gruppe (32) mit der Zahnmittelebene (38-38) einen kleineren Schrägwinkel (40<48) einschließt als eine ausschließlich zum Einfädeln verwendete und - bezogen auf die Umfangsrichtungen der Zentralachse (12-12) - auf derselben Seite der die Zentralachse (12-12) enthaltenden Zahnmittelebene (38-38) ihres Kupplungszahnes (21) liegende Schrägfläche (30) eines Kupplungszahnes (21) der zweiten Gruppe (33).

5. Synchronisiereinrichtung nach Anspruch 4,
**dadurch gekennzeichnet,**
daß ein Kupplungszahn (20) der ersten Gruppe (32) zwei symmetrisch zu der die Zentralachse (12-12) enthaltenden Zahnmittelebene (38-38) liegende und ausschließlich als Sperrflächen verwendete Schrägflächen (17, 18) aufweist.

6. Synchronisiereinrichtung nach den Ansprüchen 4 und 5,
**dadurch gekennzeichnet,**
daß ein Kupplungszahn (21) der zweiten Gruppe (33) zwei asymmetrisch zu der die Zentralachse (12-12) enthaltenden Zahnmittelebene (38-38) liegende und ausschließlich zum Einfädeln verwendete Schrägflächen (30, 31) aufweist.

7. Synchronisierreinrichtung nach Anspruch 6,
**dadurch gekennzeichnet,**
daß die - bezogen auf die Umfangsrichtungen der Zentralachse (12-12) - asymmetrisch auf der anderen Seite der die Zentralachse (12-12) enthaltenden Zahnmittelebene (38-38) ihres der zweiten Gruppe (33) zugehörigen Kupplungszahnes (21) liegende und ausschließlich zum Einfädeln verwendete Schrägfläche (31) einen kleineren Schrägwinkel (60<55) mit der Zahnmittelebene (38-38) einschließt als die ebenfalls auf der anderen Seite der die Zentralachse (12-12) enthaltenden Zahnmittelebene (38-38) ihres der ersten Gruppe (32) zugehörigen Kupplungszahnes (20) liegende und ausschließlich als Sperrfläche verwendete Schrägfläche (18).
